(19) Europäisches Patentamt
European Patent Office
Office européen des brevets

(11) **EP 2 873 178 B1**

(12) **EUROPEAN PATENT SPECIFICATION**

(45) Date of publication and mention
of the grant of the patent:
**15.02.2017 Bulletin 2017/07**

(21) Application number: **12743252.4**

(22) Date of filing: **12.07.2012**

(51) Int Cl.:
**H04B 17/00** (2015.01) **H04J 11/00** (2006.01)

(86) International application number:
**PCT/SE2012/050831**

(87) International publication number:
**WO 2014/011093 (16.01.2014 Gazette 2014/03)**

(54) **USER EQUIPMENT AND ASSOCIATED METHOD**

BENUTZERVORRICHTUNG UND ZUGEHÖRIGES VERFAHREN

ÉQUIPEMENT UTILISATEUR ET PROCÉDÉ ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.05.2015 Bulletin 2015/21**

(73) Proprietor: **Telefonaktiebolaget LM Ericsson
(publ)
164 83 Stockholm (SE)**

(72) Inventor: **HAMMARWALL, David
S-186 53 Vallentuna (SE)**

(74) Representative: **Ericsson
Patent Development
Torshamnsgatan 21-23
164 80 Stockholm (SE)**

(56) References cited:
**US-A1- 2010 106 828**

• **INTERDIGITAL COMMUNICATIONS ET AL: "CQI
definition for CoMP", 3GPP DRAFT; R1-121310,
3RD GENERATION PARTNERSHIP PROJECT
(3GPP), MOBILE COMPETENCE CENTRE ; 650,
ROUTE DES LUCIOLES ; F-06921
SOPHIA-ANTIPOLIS CEDEX ; FRANCE, vol. RAN
WG1, no. Jeju, Korea; 20120326 - 20120330, 20
March 2012 (2012-03-20), XP050599600,
[retrieved on 2012-03-20]**
• **YUSUKE OHWATARI ET AL: "Performance of
Advanced Receiver Employing Interference
Rejection Combining to Suppress Inter-Cell
Interference in LTE-Advanced Downlink",
VEHICULAR TECHNOLOGY CONFERENCE (VTC
FALL), 2011 IEEE, IEEE, 5 September 2011
(2011-09-05), pages 1-7, XP032029680, DOI:
10.1109/VETECF.2011.6093196 ISBN:
978-1-4244-8328-0**
• **MARKO LAMPINEN ET AL: "System-Level
Modeling and Evaluation of Interference
Suppression Receivers in LTE System",
VEHICULAR TECHNOLOGY CONFERENCE (VTC
SPRING), 2012 IEEE 75TH, IEEE, 6 May 2012
(2012-05-06), pages 1-5, XP032202381, DOI:
10.1109/VETECS.2012.6239964 ISBN:
978-1-4673-0989-9**

**Description**

**TECHNICAL FIELD**

The invention relates to a user equipment and associated method for improved handling of interference.

**BACKGROUND**

In mobile communication systems, there are many network nodes, such as radio base stations, that are used to provide coverage to user equipments (UEs). However, the network nodes are often arranged such that the UEs experience interference from neighbouring network nodes. Such interference limits the link quality for UEs, resulting in limited spectral efficiency and throughput. Moreover, in systems employing Coordinated Multipoint Transmission (CoMP), the interference often takes the appearance of a so-called flash light behaviour, where the interference level rapidly changes (due to beamforming and other dynamic coordination). This flashlight effect will deteriorate the decoding performance of received signals even further.

INTERDIGITAL COMMUNICATIONS ET AL: "CQI definition for CoMP", 3GPP DRAFT; R1-121310, 20 March 2012, discloses a way to increase the achievable throughput gains with DL CoMP, by enhancing the CSI feedback reported from the UEs.

YUSUKE OHWATARI ET AL: "Performance of Advanced Receiver Employing Interference Rejection Combining to Suppress Inter-Cell Interference in L TE-Advanced Downlink", VEHICULAR TECHNOLOGY CONFERENCE (VTC FALL), 2011 IEEE, 5 September 2011, pages 1-7, discloses an investigation of the gain from the IRC receiver taking in to account the estimation of the interference signal, i.e. the covariance matric, in terms of the downlink user throughput performance in a multi-cell environment.

US 2010/106828 A1 discloses systems and methodologies that facilitate interference measurement and reporting in a network multiple-in-multiple-out (N-MIMO) communication system.

MARKO LAMPINEN ET AL: "System-Level Modeling and Evaluation of Interference Suppression Receivers in LTE System", VEHICULAR TECHNOLOGY CONFERENCE (VTC SPRING), 2012 IEEE, 6 May 2012, pages 1-5 studies the performance of linear interference suppression receivers which estimate the interference covariance either from the data symbols or from the reference symbols.

**SUMMARY**

It is an object of embodiments presented herein to improve decoding performance when interference occurs from other network nodes than a serving network node.

The invention is defined by the claims.

According to a first aspect, it is presented a user equipment comprising: a processor; and an instruction memory. The instruction memory stores instructions that, when executed, causes the user equipment to: receive at least one command from a network node to obtain at least first and a second measurement of channel state information and send these measurements to the network node; obtain at least a first measurement of channel state information and a second measurement of channel state information as a response to the at least one command; determine whether an interference corresponding to the second measurement of channel state information occurs during a data reception phase; and decode received signals, when an interference corresponding to the second measurement of channel state information occurs, based on the second measurement of channel state information.

By reusing the second measurement of channel state information during decoding, the effect of the interference from the node corresponding to the second measurement is reduced, which increases performance in the decoding. This reduces risk of errors in decoding, e.g. having the effect of reducing the number of retransmissions are reduced.

The instructions to decode received signals may comprise instructions to use the second measurement of channel state information for a first resource block where interference corresponding to the second measurement of channel state information occurs, and without the use of the second measurement of channel state information for a second resource block where interference corresponding to the second measurement of the channel state information is absent. By coupling the measurement and decoding to a resource block, the second measurement of the channel state information is more relevant.

The instruction memory may further comprise instructions to decode without the use of the second measurement of channel state information when an interference corresponding to the second measurement of channel state information does not occur. In other words, the second measurement of channel state information is only used when the interference corresponding to the second measurement of channel state information occurs.

The instructions to decode may comprise instructions to: calculate, when an interference corresponding to the second measurement of channel state information occurs, an interference estimation using the second measurement of channel state information.

The instructions to calculate may comprise instructions to use an estimated effective channel for a network node corresponding to the second measurement of channel state information, derived from the second measurement of channel state information. In this way, the second measurement of channel state information is used to equalise for effects of the radio environment.

The instructions to determine whether the interference corresponding to the second measurement of channel state information occurs may comprise instructions to detect a radio signal component being characteristic of a network node corresponding to the second measurement of channel state information, the radio signal component comprising at least one radio signal component selected from a group consisting of a quadrature amplitude modulation, spatial radio characteristic, power level and spatial interference footprint. The mentioned radio signal components can thus be used to distinguish when the interference corresponding to the second measurement of channel state information occurs.

The instructions to determine whether an interference corresponding to the second measurement of channel state information occurs and to decode received signals may be repeatedly performed for the duration of a radio bearer associated with the received signals. In this way, the decoding adapts to when the interference corresponding to the second measurement of channel state information does and does not occur.

The instructions to determine whether an interference corresponding to the second measurement of channel state information occurs, may be performed only once for the duration of a radio bearer associated with the received signals. In this way, further evaluations of the presence or not of interference the are not performed which reduces resource usage.

The instructions may be repeated each time a command is received from a network node to obtain at least a first measurement of channel state information and a second measurement of channel state information. In this way, any new measurements of channel state information are taken into account.

The instructions to receive at least one command may comprise instructions to identify a channel state information reference signal, CSI-RS, resource, and wherein the secondary measurement of channel state information is a measurement on the CSI-RS resource.

The CSI-RS resource maybe an element in a Coordinated Multipoint Transmission, CoMP, measurement set or a CoMP resource management set, the CoMP measurement set comprising to a plurality of CSI-RS resources with non-zero power, for which the UE is configured to obtain channel measurements for CSI reporting, and the CoMP resource management set corresponding to non-zero power CSI-RS resources for measurement and reporting of reference signal received power.

The at least one command may comprise identification of an interference measurement resource, and wherein the secondary measurement of channel state information is a measurement of interference on the interference measurement resource.

The instruction memory may further comprise instructions to determine whether an interference corresponding to a third measurement of channel state information occurs during the data reception phase; the instructions to obtain may comprise instructions to obtain the third measurement of channel state information; and the instructions to decode may comprise instructions to decode received signals, when an interference corresponding to the third measurement of channel state information occurs, based on the third measurement of channel state information.

The instruction memory may further comprise instructions to send the at least first measurement of channel state information and the second measurement of channel state information to the network node. In this way, the network node receives the measurements asked for in the command previously received in the user equipment.

According to a second aspect, it is presented a method, executed in a user equipment of a mobile communication system. The method comprises the steps of: receiving at least one command from a network node to obtain at least first and a second measurement of channel state information and send these measurements to the network node; obtaining at least a first measurement of channel state information and a second measurement of channel state information as a response to the at least one command; determining whether an interference corresponding to the second measurement of channel state information occurs during a data reception phase; and decoding received signals, when an interference corresponding to the second measurement of channel state information occurs, based on the second measurement of channel state information.

The step of decoding received signals may comprise using the second measurement of channel state information for a first resource block where interference corresponding to the second measurement of channel state information occurs, and without the use of the second measurement of channel state information for a second resource block where interference corresponding to the second measurement of the channel state information is absent.

The method may further comprise the step of decoding without the use of the second measurement of channel state information when an interference corresponding to the second measurement of channel state information does not occur.

The step of decoding may comprise the step of: calculating, when an interference corresponding to the second measurement of channel state information occurs, an interference estimation using the second measurement of channel state information.

The step of calculating may comprise using an estimated effective channel for a network node corresponding to the second measurement of channel state information, derived from the second measurement of channel state information.

The step of determining whether the interference corresponding to the second measurement of channel state information occurs may comprise detecting a radio signal component being characteristic of a network node corresponding to the second measurement of channel state information, the radio signal component comprising at least one radio signal component selected from a group consisting of a quadrature amplitude modulation, spatial radio characteristic, power level and spatial interference footprint.

The steps of determining whether an interference corresponding to the second measurement of channel state information occurs and decoding received signals may be repeatedly performed for the duration of a radio bearer associated with the received signals.

The step of determining whether an interference corresponding to the second measurement of channel state information occurs, may in one embodiment be performed only once for the duration of a radio bearer associated with the received signals.

The method may be repeated each time a command is received from a network node to obtain at least a first measurement of channel state information and a second measurement of channel state information.

The step of receiving at least one command may comprise identifying a channel state information reference signal, CSI-RS, resource, and wherein the secondary measurement of channel state information is a measurement on the CSI-RS resource.

The CSI-RS resource maybe an element in a Coordinated Multipoint Transmission, CoMP, measurement set or a CoMP resource management set, the CoMP measurement set comprising to a plurality of CSI-RS resources with non-zero power, for which the UE is configured to obtain channel measurements for CSI reporting, and the CoMP resource management set corresponding to non-zero power CSI-RS resources for measurement and reporting of reference signal received power.

The at least one command may comprise identification of an interference measurement resource, and wherein the secondary measurement of channel state information is a measurement of interference on the interference measurement resource.

The step of obtaining may comprise obtaining a third measurement of channel state information; the step of determining may comprise determining whether an interference corresponding to the third measurement of channel state information occurs during the data reception phase; and the step of decoding may comprise decoding received signals, when an interference corresponding to the third measurement of channel state information occurs, based on the third measurement of channel state information.

The method may further comprise the step of: sending the at least first measurement of channel state information and the second measurement of channel state information to the network node.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

## BRIEF DESCRIPTION OF THE DRAWINGS

The invention is now described, by way of example, with reference to the accompanying drawings, in which:

Fig 1 is a schematic diagram illustrating a mobile communication system where embodiments presented herein can be applied;

Fig 2 is a schematic diagram illustrating different phases used in the mobile communication system of Fig 1;

Fig 3 is a schematic diagram illustrating resource blocks used in the mobile communication system of Fig 1;

Fig 4 is a flow chart illustrating a method according to one embodiment, performed in the mobile communication system of Fig 1;

Fig 5 is a flow chart illustrating a method according to an alternative one embodiment, performed in the mobile communication system of Fig 1;

Fig 6 is a schematic diagram illustrating elements of the user equipment of Fig 1; and

Fig 7 shows one example of a computer program product comprising computer readable means.

**DETAILED DESCRIPTION**

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

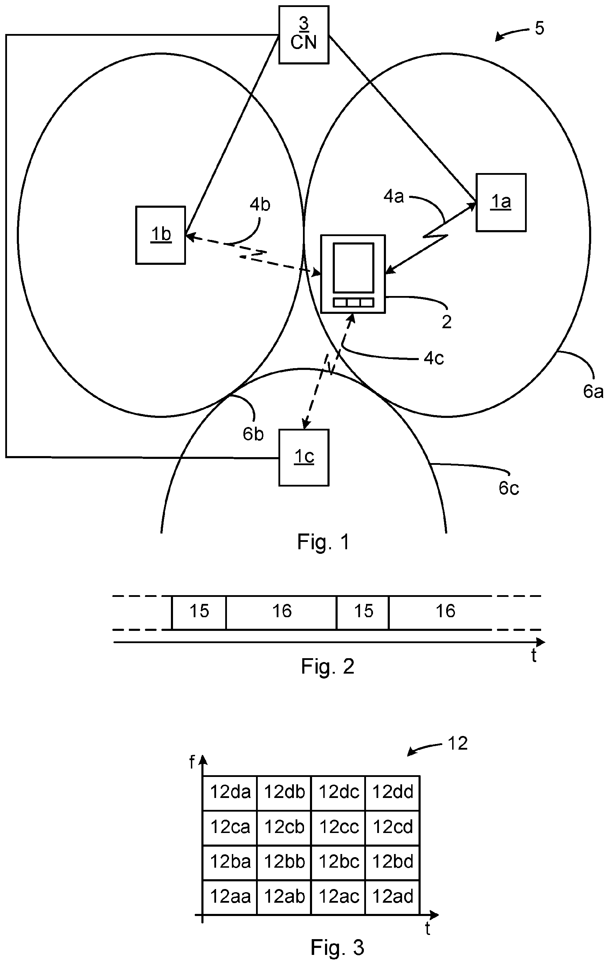

Fig 1 is a schematic diagram illustrating a mobile communication system 5 where embodiments presented herein can be applied. The mobile communications system 5 comprises a core network 3 and one or more network nodes 1a-c, being a radio base station such as evolved Node Bs 1, also known as eNode Bs or eNBs. The network nodes 1a-c could also be in the form of Node Bs, BTSs (Base Transceiver Stations) and/or BSSs (Base Station Subsystems). Moreover, one or more of the network nodes 1a-c could be a remote radio unit under control of a radio base station. In any case, each network node 1a-c provides radio connectivity to one or more user equipments (UEs) 2. The term UE is also known as mobile communication terminal, mobile terminal, user terminal, user agent, etc.

The network nodes 1a-c are also connected to the core network 3 for connectivity to central functions and other networks. While the mobile communication system 5 of Fig 1 shows three network nodes 1a-c, the mobile communication system 5 can have any number of network nodes and corresponding wireless radio interfaces and cells, supporting a suitable number of UEs.

The mobile communication system 5 can e.g. comply with any one or a combination of LTE (Long Term Evolution), W-CDMA (Wideband Code Division Multiplex), EDGE (Enhanced Data Rates for GSM Evolution, GPRS (General Packet Radio Service)), CDMA2000 (Code Division Multiple Access 2000), etc., or any future mobile communication system standard, as long as the principles described hereinafter are applicable.

The communication between each UE 2 and the network nodes 1a-c occurs over a wireless radio interface. In this example, there is a first wireless radio interface 4a between the UE 2 and a first network node 1a, being the serving network node. Moreover, there is a second wireless radio interface 4b between the UE 2 and a second network node 1b and a third wireless interface 4c between the UE 2 and the third network node 1c. Each network node 1a-c provides coverage using a corresponding cell 6a-c. In this example, each network node 1a-c has a single associated cell 6a-c. However, it is to be noted that each network node can have multiple associated cells and the number of associated cells can differ between network nodes.

The UE 2 is sometimes commanded to perform measurements on the radio environment, such as channel state information, as seen from the UE 2, e.g. when known reference symbols sequences are transmitted from one or more of the network nodes 1a-c.

The general situation of channel state information and coordinated multipoint transmissions will now be presented.

Channel State Information Reference Signal (CSI-RS)

CSI-RS (Channel State Information-Reference Signal) is a reference symbol sequence for estimating channel state information. CSI-RS provides several advantages over basing the CSI feedback on the common reference symbols (CRS) which has been used, for that purpose, in the past. Firstly, the CSI-RS is not used for demodulation of the data signal, and thus does not require the same density (i.e., the overhead of the CSI-RS is substantially less). Secondly, CSI-RS provides a more flexible means to configure CSI feedback measurements (e.g., which CSI-RS resource to measure on can be configured in a UE specific manner). Moreover, the support of antenna configurations larger than 4 antennas must resort to CSI-RS, since the CRS is only defined for at most 4 antennas.

By measuring on a CSI-RS, the UE 2 can estimate the effective channel the CSI-RS is traversing all the way from the transmitting network node to the UE 2, including the radio propagation channel, antenna gains, and any possible antenna virtualizations (i.e., a CSI-RS port maybe precoded so that it is virtualized over multiple physical antenna ports; that is, the CSI-RS port can be transmitted on multiple physical antenna ports, possibly with different gains and phases). In more mathematical rigor, with n indicating a sequence number for all parameters, this implies that if a known CSI-RS signal sequence $\mathbf{x}_n$ is transmitted, a UE can estimate the coupling between the transmitted signal and the received signal (i.e., the effective channel). Hence if no virtualization is performed in the transmission:

$$\mathbf{y}_n = \mathbf{H}_n \mathbf{x}_n + \mathbf{e}_n \qquad (1)$$

where $\mathbf{y}_n$ is the received signal sequence, $\mathbf{H}_n$ is the transfer function and $\mathbf{e}_n$ is noise and interference. Using CSI-RS, the UE 2 can then measure the effective channel $\mathbf{H}_{eff} = \mathbf{H}_n$. Similarly, if the CSI-RS is virtualized using a precoder $\mathbf{W}_{N_T \times r}$ as

$$\mathbf{y}_n = \mathbf{H}_n \mathbf{W}_{N_T \times r} \mathbf{x}_n + \mathbf{e}_n \qquad (2)$$

the UE can estimate the effective channel $\mathbf{H}_{eff} = \mathbf{H}_n W_{N_T \times r}$.

Related to CSI-RS is the concept of zero-power CSI-RS resources (also known as a muted CSI-RS) that are configured just as regular CSI-RS resources, so that a UE knows that the data transmission is mapped around those resources. The intent of the zero-power CSI-RS resources is to enable the network to mute the transmission on the corresponding resources as to boost the SINR (Signal to Interference and Noise Ratio) of a corresponding non-zero power CSI-RS, possibly transmitted in a neighbour cell/network node. As the name indicates, a UE can assume that the network nodes of interest are not transmitting on the muted CSI-RS resource and the received power can therefore be used as a measure of the interference plus noise level.

Based on a specified CSI-RS resource and an interference measurement configuration (e.g. a muted CSI-RS resource), the UE can estimate the effective channel and noise plus interference, and consequently also determine which rank, precoder and transport format to recommend that best match the particular channel.

Coordinated Multipoint Transmission (CoMP)

CoMP transmission and reception refers to a system where the transmission and/or reception at multiple, geographically separated antenna sites is coordinated in order to improve system performance. For example, for the UE 2 of Fig 1, the first and second network nodes 1a-b can cooperate in such a way since the UE 2 is relatively close to both these network nodes 1a-b.

The coordination can either be distributed, by means of direct communication between the different sites, or by means of a central coordinating node.

CoMP is a tool introduced in LTE to improve the coverage of high data rates, the cell-edge throughput and/or to increase system throughput. In particular, the goal is to distribute the performance perceived by the user more evenly in the network by taking control of the interference in the system, either by reducing the interference and/or by better prediction of the interference.

CoMP operation targets many different deployments, including coordination between sites and sectors in cellular macro deployments, as well as different configurations of Heterogeneous deployments, where for instance a macro node coordinates the transmission with pico nodes within the coverage area of the macro node.

There are many different CoMP transmission schemes that are possible, of which some will now be explained.

Dynamic Point Blanking where multiple network nodes coordinate the transmission so that neighbouring network nodes may mute the transmissions on the time-frequency resources (TFREs) that are allocated to UEs that experience significant interference. In LTE, such TFREs are grouped into resource blocks, and are illustrated in Fig 3.

Coordinated Beamforming where the network nodes coordinate the transmissions in the spatial domain by beamforming the transmission power in such a way that the interference to UEs served by neighbouring network nodes is suppressed.

Dynamic Point Selection where the data transmission to a UE may switch dynamically (in time and frequency) between different network nodes, to improve utilisation of network nodes.

Joint Transmission where the signal to a UE is simultaneously transmitted from multiple network nodes on the same time/frequency resource. The aim of joint transmission is to increase the received signal power and/or reduce the received interference (compared to if the cooperating network nodes otherwise would serve some other UEs without taking our Joint Transmission UE into consideration).

CoMP Feedback

A common denominator for the CoMP transmission schemes is that the network needs CSI information not only for the serving network node, but also for the channels linking the neighbouring network nodes to a terminal. By, for example, configuring a unique CSI-RS resource per network node, a UE can resolve the effective channels for each network node by measurements on the corresponding CSI-RS.

A few candidates for CoMP feedback are on the table for LTE Release 11. Most alternatives are based on per CSI-RS resource feedback, possibly with CQI (Channel Quality Indicator) aggregation of multiple CSI-RS resources. The following list briefly introduces a few relevant alternatives (note that a combination of the alternatives is also possible):

> Per CSI-RS resource feedback corresponds to separate reporting of channel state information (CSI) for each of a set of CSI-RS resources. Such a CSI report could for example correspond to a Precoder Matrix Indicator (PMI), Rank Indicator (RI), and/or CQI, which represent a recommended configuration for a hypothetical downlink transmission over the same antennas used for the associated CSI-RS (or the RS used for the channel measurement).

Typically there is a one-to-one mapping between a CSI-RS and a network node, in which case per CSI-RS resource feedback corresponds to per-network node feedback; that is, a separate PMI/RI/CQI is reported for each network node. Note that there could be interdependencies between the CSI reports; for example, they could be constrained to have the same RI. Interdependencies between CSI reports have many advantages, such as: reduced search space when the UE computes feedback, reduced feedback overhead, and in the case of reuse of RI there is a reduced need to perform rank override at the eNodeB.

The considered CSI-RS resources are configured by the eNodeB as the CoMP Measurement Set.

Aggregate feedback corresponds to a CSI report for a channel that corresponds to an aggregation of multiple CSI-RS. For example, a joint PMI/RI/CQI can be recommended for a joint transmission over all antennas associated with the multiple CSI-RS.

However, a joint search maybe too computationally demanding for the UE, and a simplified form of aggregation is to evaluate an aggregate CQI which are combined with per CSI-RS resource PMIs (which should typically all be of the same rank corresponding to the aggregated CQI or CQIs). Such a scheme also has the advantage that the aggregated feedback may share much information with a per CSI-RS resource feedback. This is beneficial, because many CoMP transmission schemes require per CSI-RS resource feedback, and to enable eNodeB flexibility in dynamically selecting CoMP scheme, aggregated feedback would typically be transmitted in parallel with per CSI-RS resource feedback. To support coherent joint transmission, such per CSI-RS resource PMIs can be augmented with co-phasing information, enabling the eNodeB to rotate the per CSI-RS resource PMIs so that the signals coherently combine at the receiver.

Interference Measurements for CoMP

For efficient CoMP operation, it is beneficial to capture appropriate interference assumptions when determining the CQIs as well as to capture the appropriate received desired signal. To be more precise: we define a CSI process as the reporting process of CSI (e.g., CQI and potentially associated PMI/RI) for a particular effective channel (defined by one or multiple associated reference sequences) and a particular interference hypothesis (defined e.g., by a particular CQI reference resource, and/or a interference measurement resource, and/or a UE emulated interference configuration, see below).

In uncoordinated systems, the UE can effectively measure the interference observed from all other network nodes (or all other cells), which will be the relevant interference level in an upcoming data transmission. Such interference measurements can e.g. be performed by analysing the residual interference on CRS resources (after the UE subtracts the impact of the CRS signal).

However, in coordinated systems, performing CoMP, such interference measurements become increasingly irrelevant. More specifically, within a coordination cluster an eNodeB can to a large extent control which network nodes that interferes a UE in any particular TFRE. Hence, there will be multiple interference hypotheses depending on which network nodes are transmitting data to other UEs.

For the purpose of improved interference measurements, new functionality is introduced in LTE Release 11, where the agreement is that the network will be able to configure which particular TFREs are to be used for interference measurements for a particular UE; this is defined as an interference measurement resource (IMR). The network can thus control the interference seen on a IMR, by for example muting all network nodes within a coordination cluster on the associated TFREs, in which case the UE will effectively measure the inter CoMP cluster interference.

Moreover, take for example a dynamic point blanking scheme, where there are (at least) two relevant interference hypothesis for a particular UE: in one interference hypothesis, the UE sees no interference from the coordinated network node; and in the other hypothesis the UE sees interference from the neighbouring network node. To enable the network to effectively determine whether or not a network node should be muted, the UE can report two (or more generally multiple) CQIs corresponding to different interference hypotheses-that is, there can be two (or more) CSI processes corresponding to different interference scenarios.

To facilitate such a scheme, multiple IMRs could be configured, wherein the network is responsible for implementing each relevant interference hypothesis in the corresponding IMR. Hence, by associating a particular IMR with a particular CSI process, relevant CQIs can be made available to the network for effective scheduling.

Another approach is to have the UE emulate interference from within the coordinated network nodes (according to an interference hypothesis), by for example, assuming an isotropic transmission from each of the network nodes that are assumed interfering for the interference hypothesis. This has the advantage that it may be sufficient that the UE performs interference measurements on a single IMR, where there is no interference from the coordinated network nodes, from which each of the interference hypothesis are derived. For example, if this residual interference and noise is measured and characterized, by the UE, as a complex valued Gaussian random process

$$\mathbf{e}_n \in CN(0, \mathbf{Q_e}) \qquad (3)$$

where CN denotes a complex normal distribution, $\mathbf{Q_e}$ is the correlation matrix and the elements of $\mathbf{e}_n$ corresponds to an interference implementation on each of the receive antennas. Then the UE can amend the residual interference to correspond to a particular CoMP interference hypothesis by emulating intra CoMP cluster interference from a network node, for which it has measured an effective channel, $\mathbf{H}_{eff}$, as

$$\widetilde{\mathbf{e}}_n = \mathbf{e}_n + \mathbf{H}_{eff}\mathbf{q}_n \qquad (4)$$

where $\mathbf{q}_n$ is an isotropic random signal of a specific nominal power. Note, however, that for a UE to be able to emulate intra CoMP cluster interference the UE needs to acquire a reliable channel estimate for each network node it should add interference for. In practice this means that,

- The UE needs to know the presence of the node (more specifically, the presence of the associated reference signals on which it would measure the channel)
- The SINR of the reference signals needs to be sufficiently high to perform sufficiently accurate estimates of the effective channel
- The processing of the UE must be dimensioned to be capable of tracking each of these effective channel estimates

In the methods described below, it will be shown how the command from a network node to obtain CSI measurements will be used during subsequent decoding, as an indication as to what network nodes are likely to be used for subsequent transmissions to the UE.

Fig 2 is a schematic diagram illustrating different phases used in the mobile communication system of Fig 1, and in this example, for the UE 2. Here, a measurement phase 15 is a period where radio measurements, such as measurements of channel state information are obtained by the UE 2. No user data is transmitted or received during this phase.

After the measurement phase 15, there is a data transfer phase 16 where data can be received at the UE from one or more network nodes and/or transmitted from the UE to one or more network nodes. The phases 15, 16 are repeated.

On a larger scale, the measurements maybe obtained in parallel with the data transmissions. In LTE, different signals can be multiplexed on different frequencies, and hence measured and decoded in parallel.

A single "resource block" is partitioned into a finer grid of "resource elements" in time and frequency that are partitioned between reference signals (for measurements) and data. Hence, even within a single resource block both measurement signals and data may (or actually are) multiplexed.

Fig 3 is a schematic diagram illustrating TFREs 12 used in the mobile communication system of Fig 1. The horizontal axis represents time and the vertical axis represents frequency. Each combination of a set of subcarriers and a time period is thus a TFRE, represented here by TFREs 12aa-12dd.

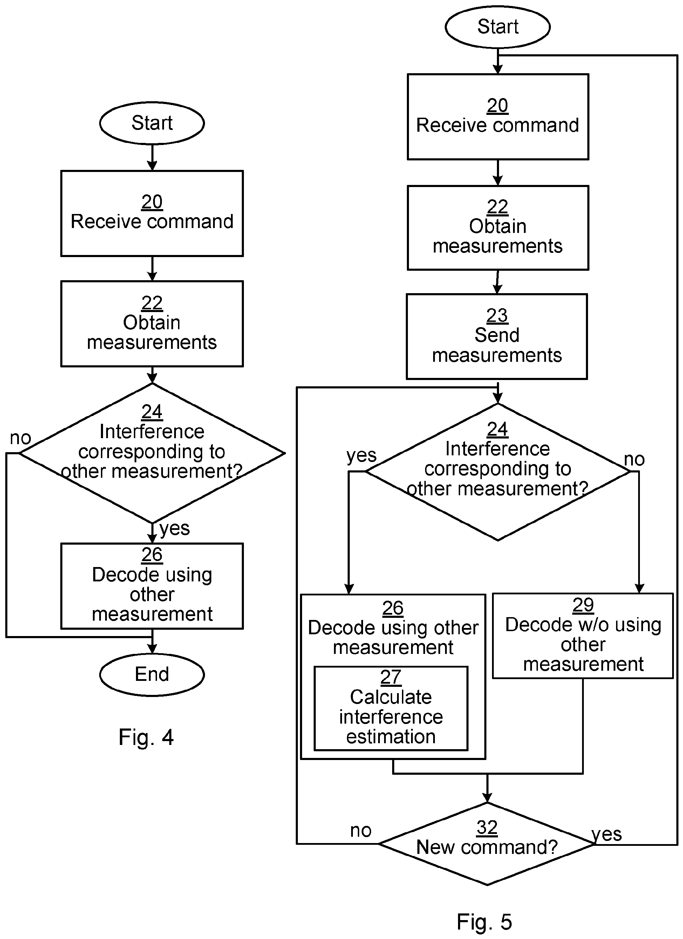

Fig 4 is a flow chart illustrating a method according to one embodiment, performed in the UE 2 of mobile communication system of Fig 1.

In an initial *receive command* step 20, at least one command from a network node 1a-c is received. The one or more commands instruct the UE to perform at least a first and a second CSI measurement using CSI-RS.

Hence, the one or more commands comprise identifies appropriate CSI-RSs. These CSI-RSs can be elements of a CoMP measurement set or a CoMP resource management set. Optionally, the one or more commands instruct the UE to perform further CSI measurements such as a third measurement, etc. The first measurement of CSI is associated with the serving network node and any other measurements, such as the second, third, etc. measurements are hereinafter also known as other measurement/measurements.

Optionally, the one or more commands comprise identification of which particular TFREs that are to be used for interference measurements for the UE, i.e. pointing to an interference measurement resource (IMR).

In an *obtain measurements* step 22, at least the first measurement of CSI and the second measurement of CSI are obtained, as a response to the at least one command. This step is performed in the measurement phase (see 15 of Fig 2). If further measurements were ordered by the command, such as a third measurement of CSI, such measurements are also obtained in this step.

CSI can cover a variety of different measurements, such as CQI/RI/PMI, Reference Signal Received Power (RSRP), or Interference State (as measured on a specific interference measurement resource).

In one embodiment, the UE determines the potential interfering network nodes (or more specifically the associated reference signals) by a configuration identifying a CoMP Measurement Set corresponding to a plurality of non-zero power CSI-RS resources, for which the UE is configured to obtain channel measurements for CSI reporting (including CSI-RS resources used for interference emulation) facilitating CoMP transmissions to the UE. The CoMP Measurement Set typically contains the CSI-RS resources of the nodes that are actively coordinated for transmissions to the particular UE, which is also strongly correlated with the strongest potential interferers. These interferers are particularly suitable to account for, since these CSI-RS resources are typically dynamically coordinated, which typically would result in dynamic (potentially frequency selective) switching between the different interference hypotheses.

In one embodiment, the UE determines the potential interfering network nodes from a CoMP Resource Management Set corresponding to non-zero power CSI-RS resources for which the UE is instructed to measure and report reference signal received power. Typically the CSI-RS resources in a CoMP Resource Management Set correspond to network nodes that are candidates for coordination for a UE, and hence correspond to candidate dominating interferers. These CSI-RS resources can be utilised to form structured interference estimates. Also, note that these CSI-RS would typically correspond to network nodes that are capable of dynamic coordination, and hence are likely to show a substantial flashlight effect, whose detrimental effect may be reduced by the embodiments presented herein.

In one embodiment, the serving network node aids the UE in determining the presence of an interfering signal. For example, the serving network node can dynamically indicate, as part of a DCI (Downlink Control Information) format, that interference over a particular effective channel, defined by a particular reference signal in a CoMP Measurement Set, is present or not present.

In one embodiment, the UE receives a configuration from the serving network node of a plurality of interference measurement resources, for the purpose of CSI reporting of multiple interference hypotheses. Hence, the interference that is found on each of the plurality of interference measurement resources typically corresponds to a particular coordinated interference source. Hence the UE can determine a plurality of interference hypotheses, for which the UE may estimate the statistical characteristics by measurements on the respective interference measurement resource. The UE can thus, using approaches as disclosed in more detail below, take the a priori information of these interference hypotheses into account in the decoding of a subsequent data transmission.

In a conditional *interference corresponding to other measurement step* 24, it is determined whether an interference corresponding to the other measurement/measurements (such as a second, third, etc. measurement) of CSI occurs during the data reception phase (see 16 of Fig 2). If the condition is true, the method continues to a *decode using other measurement* step 26. Otherwise, the method ends.

The UE has previously received an identification of a CST-RS corresponding to a potentially interfering network node. This can be used to estimate noise and interference under two hypotheses where interference from a neighbouring network node is present or absent, respectively. One hypothesis corresponds to the presence of interference from the neighbouring network node,

$$\widetilde{\mathbf{e}}_n = \mathbf{e}_n + \mathbf{H}_{eff}\mathbf{q}_n \qquad (5)$$

and another hypothesis corresponding to no interference from the neighbouring network node,

$$\widetilde{\mathbf{e}}'_n = \mathbf{e}_n \qquad (6)$$

where $\mathbf{H}_{eff}$ is an estimated effective channel to the interferer. $\mathbf{H}_{eff}$ can be estimated from measurements performed on the identified reference signal and the statistical characteristics of the residual interference and noise, $\mathbf{e}_n$, may, for example be measured on a configured interference measurement resource.

The determination of this step optionally comprises detecting a radio signal component being characteristic of a network node corresponding to the other measurement of channel state information. Such a radio signal component comprises at least one of a quadrature amplitude modulation, spatial radio characteristic, power level and spatial interference footprint, e.g. of $\mathbf{H}_{eff}$.

In the *decode using other measurement* step 26, decoding of the received signals occur, based on the other measurement of CSI. The decoding can optionally include using the other measurement of CSI for a first resource block where interference corresponding to the other measurement of CSI occurs. In that situation, the other measurement of CSI is not used for a second resource block where interference corresponding to the second measurement of the CSI is absent.

In the decoding, the UE thus takes into account the a priori information that the interference is characterized by $\tilde{\mathbf{e}}_n$ when interference corresponding to other measurement is present. Hence, the interference from the other network node can be taken into account, and e.g. suppressed, during the decoding.

Fig 5 is a flow chart illustrating a method according to an alternative one embodiment, performed in the mobile communication system of Fig 1. The method is an expansion of the method of Fig 4 and only new steps and steps which function differently than those of Fig 4 are described here.

In a *send measurements* step 23, the at least first measurement of channel state information and the second measurement of channel state information are sent to the network node 1a-c. In this way, the network node sending the command received in the receive command step 20 gets the measurements that were asked for.

In this embodiment, if in the conditional *interference corresponding to other measurement step* 24, the condition is false, the method continues to a *decode without using other measurement* step 29.

In the *decode without using other measurement* step 29, the UE decodes without the use of the second measurement of CSI when an interference corresponding to the second measurement of CSI does not occur. Hence, the interference in this step is represented by $\tilde{\mathbf{e}}'_n$, calculated as explained above.

In this embodiment, the *decode using other measurement* step 26, comprises a *calculate interference estimation* step 27. In this step, the UE calculates an interference estimation using the second measurement of channel state information. In one embodiment, this calculation comprises using an estimated effective channel for a network node corresponding to the second measurement of channel state information, derived from the second measurement of channel state information.

In a conditional *new command* step 32, it is checked whether a new command has been received from the serving network node to perform new CSI measurements. If such a command has been received, the method returns to the *receive command* step 20. Otherwise, the method returns to the conditional *interference corresponding to other measurement* step 24. In this way, the radio environment is repeatedly analysed to detect the presence or absence of interference from other network nodes, which adapts the decoding appropriately.

This method optionally ends when the associated radio bearer is torn down.

Optionally, only the *decode using other measurement* step 26 is repeated during the duration of the radio bearer. This reduces the computational needs to repeatedly analyse the radio situation for any change in presence or absence of interference from other network nodes. In other words, the UE targets the interference suppression for $\tilde{\mathbf{e}}_n$, which corresponds to the worst case interference. This will result in reduced performance when there is no interference over $\mathbf{H}_{eff}$, but the performance with the additional interference over $\mathbf{H}_{eff}$ will be improved. This solution also has reduced computational complexity in that multiple interference hypotheses do not need to be evaluated

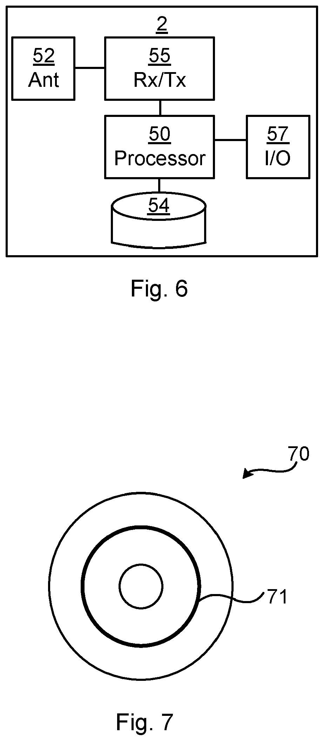

Fig 6 is a schematic diagram illustrating elements of the UE of Fig 1. A processor 50 is provided using any combination of one or more of a suitable central processing unit (CPU), multiprocessor, microcontroller, digital signal processor (DSP), application specific integrated circuit etc., capable of executing software instructions stored in a computer program product 54, e.g. in the form of a memory. The processor 50 can be configured to execute the method described with reference to Figs 4-5 above.

The computer program product 54 can be a memory being any combination of read and write memory (RAM) and read only memory (ROM). The memory also comprises persistent storage, which, for example, can be any single one or combination of solid state memory, magnetic memory, or optical memory.

The UE 2 further comprises an I/O interface 57 e.g. for communicating with a user.

The UE 2 also comprises one or more transceivers 55, comprising analogue and digital components, and a suitable number of antennas 52 for radio communication with network nodes. The processor 50 controls the general operation of the radio base station, e.g. by sending control signals to the transceiver 55 and receiving reports from the transceiver 55 of its operation.

Other components of the radio base station are omitted in order not to obscure the concepts presented herein.

Fig 7 shows one example of a computer program product 70 comprising computer readable means. On this computer readable means, a computer program 71 can be stored, which computer program can cause a processor to execute a method according to the embodiments described herein. In this example, the computer program product is an optical disc, such as a CD (compact disc) or a DVD (digital versatile disc) or a Blu-Ray disc. As explained above, the computer program product could also be embodied as a memory of a device, such as the computer program product 54 of Fig 6 or in an external memory such as a USB (Universal Serial Bus) memory. While the computer program 71 is here schematically shown as a track on the depicted optical disk, the computer program can be stored in any way which is suitable for the computer program product.

Using the embodiments shown, improved interference suppression is achieved, e.g. in a system deploying dynamic point blanking, wherein a coordinated interfering network node is dynamically blanked (muted) to increase the performance of UEs subjected to interference. In such a system, the interference in the received signal would dynamically switch between the two hypotheses. In particular the caused flashlight effect will inherently be effectively accounted for by the UE decoder using the dynamic adjustment of the interference suppression.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A user equipment (2) comprising:

    a processor (50); and
    an instruction memory (54) storing instructions that, when executed, causes the user equipment (2) to:

        receive at least one command from a network node (1a-c) to obtain at least first and a second measurement of channel state information and to send these measurements to the network node (1a-c); wherein the instructions to receive at least one command comprise instructions to identify a channel state information reference signal, CSI-RS, resource;
        obtain at least a first measurement of channel state information and a second measurement of channel state information as a response to the at least one command, and wherein the secondary measurement of channel state information is a measurement on the CSI-RS resource;
        determine whether an interference corresponding to the second measurement of channel state information occurs during a data reception phase (16) by comparing two hypotheses where interference from a neighbouring network node is present or absent, respectively; and
        decode received signals, when an interference corresponding to the second measurement of channel state information occurs, based on the second measurement of channel state information.

2. The user equipment (2) according to claim 1, wherein the instructions to decode received signals comprises instructions to use the second measurement of channel state information for a first resource block where interference corresponding to the second measurement of channel state information occurs, and without the use of the second measurement of channel state information for a second resource block where interference corresponding to the second measurement of the channel state information is absent.

3. A method, executed in a user equipment (2) of a mobile communication system (5), the method comprising the steps of:

    receiving (20) at least one command from a network node (1a-c) to obtain at least first and a second measurement of channel state information and to send these measurements to the network node (1a-c), wherein the step of receiving comprises identifying a channel state information reference signal, CSI-RS, resource;
    obtaining (22) at least a first measurement of channel state information and a second measurement of channel state information as a response to the at least one command, wherein the second measurement of channel state information is a measurement on the CSI-RS resource;
    determining (24) whether an interference corresponding to the second measurement of channel state information occurs during a data reception phase (16) by comparing two hypotheses where interference from a neighbouring network node is present or absent, respectively; and
    decoding (26) received signals, when an interference corresponding to the second measurement of channel state information occurs, based on the second measurement of channel state information.

4. The method according to claim 3, wherein the step of decoding (26) received signals comprises using the second measurement of channel state information for a first resource block where interference corresponding to the second measurement of channel state information occurs, and without the use of the second measurement of channel state information for a second resource block where interference corresponding to the second measurement of the channel state information is absent.

5. The method according to claim 3, further comprising the step of decoding (29) without the use of the second measurement of channel state information when an interference corresponding to the second measurement of channel state information does not occur.

6. The method according to claims 3 to 5, wherein the step of decoding (26) comprises the step of:

calculating (27), when an interference corresponding to the second measurement of channel state information occurs, an interference estimation using the second measurement of channel state information.

7. The method according to claim 6, wherein the step of calculating (27) comprises using an estimated effective channel for a network node corresponding to the second measurement of channel state information, derived from the second measurement of channel state information.

8. The method according to any of claim 3 to 7, wherein the step of determining (24) whether the interference corresponding to the second measurement of channel state information occurs comprises detecting a radio signal component being characteristic of a network node corresponding to the second measurement of channel state information, the radio signal component comprising at least one radio signal component selected from a group consisting of a quadrature amplitude modulation, spatial radio characteristic, power level and spatial interference footprint.

9. The method according to any of claim 3 to 8, wherein the steps of determining (24) whether an interference corresponding to the second measurement of channel state information occurs and decoding (26) received signals are repeatedly performed for the duration of a radio bearer associated with the received signals.

10. The method according to any of claim 3 to 8, wherein the step of determining (24) whether an interference corresponding to the second measurement of channel state information occurs, is performed only once for the duration of a radio bearer associated with the received signals.

11. The method according to any of claim 3 to 8, wherein the method is repeated each time a command is received from a network node (1a-c) to obtain at least a first measurement of channel state information and a second measurement of channel state information.

12. The method according to claim 11, wherein the CSI-RS resource is an element in a Coordinated Multipoint Transmission, CoMP, measurement set or a CoMP resource management set, the CoMP measurement set comprising to a plurality of CSI-RS resources with non-zero power, for which the UE is configured to obtain channel measurements for CSI reporting, and the CoMP resource management set corresponding to non-zero power CSI-RS resources for measurement and reporting of reference signal received power.

13. The method according to any of claim 3 to 10, wherein the at least one command comprises identification of an interference measurement resource, and wherein the secondary measurement of channel state information is a measurement of interference on the interference measurement resource.

14. The method according to any of claim 3 to 13, wherein the step of obtaining (22) comprises obtaining a third measurement of channel state information; the step of determining (24) comprises determining whether an interference corresponding to the third measurement of channel state information occurs during the data reception phase (16); and the step of decoding (26) comprises decoding received signals, when an interference corresponding to the third measurement of channel state information occurs, based on the third measurement of channel state information.

15. The method according to any one of claims 3 to 14, further comprising the step of: sending the at least first measurement of channel state information and the second measurement of channel state information to the network node (1a-c).

**Patentansprüche**

1. Benutzergerät (2), umfassend:

   einen Prozessor (50) und
   einen Anweisungsspeicher (54), der Anweisungen speichert, die bei Ausführung das Benutzergerät (2) veranlassen zum:

   Empfangen mindestens eines Befehls von einem Netzwerkknoten (1a-c), um mindestens eine erste und eine zweite Messung von Kanalzustandsinformationen zu erhalten, und Senden dieser Messungen zum Netzwerkknoten (1a-c); wobei die Anweisungen zum Empfangen mindestens eines Befehls Anweisungen zum Identifizieren einer Kanalzustandsinformationen-Referenzsignal-, CSI-RS, Ressource umfassen;
   Erhalten mindestens einer ersten Messung von Kanalzustandsinformationen und einer zweiten Messung von Kanalzustandsinformationen als Reaktion auf den mindestens einen Befehl, und wobei die sekundäre Messung von Kanalzustandsinformationen eine Messung an der CSI-RS Ressource ist;
   Bestimmen, ob eine Interferenz entsprechend der zweiten Messung von Kanalzustandsinformationen während einer Datenempfangsphase (16) auftritt, durch einen Vergleich von zwei Hypothesen, bei welchen eine Interferenz von einem benachbarten Netzwerkknoten vorhanden beziehungsweise nicht vorhanden ist.; und
   Decodieren empfangener Signale, wenn eine Interferenz, die der zweiten Messung von Kanalzustandsinformationen entspricht, auftritt, basierend auf der zweiten Messung von Kanalzustandsinformationen.

2. Benutzergerät (2) nach Anspruch 1, wobei die Anweisungen zum Decodieren empfangener Signale Anweisungen umfassen, die zweite Messung von Kanalzustandsinformationen für einen ersten Ressourcenblock zu verwenden, wo eine Interferenz entsprechend der zweiten Messung von Kanalzustandsinformationen auftritt, und die zweite Messung von Kanalzustandsinformationen für einen zweiten Ressourcenblock nicht zu verwenden, wo eine Interferenz entsprechend der zweiten Messung von Kanalzustandsinformationen nicht vorhanden ist.

3. Verfahren, das in einem Benutzergerät (2) eines Mobilkommunikationssystems (5) ausgeführt wird, wobei das Verfahren die Schritte umfasst:

   Empfangen (20) mindestens eines Befehls von einem Netzwerkknoten (1a-c), um mindestens eine erste und eine zweite Messung von Kanalzustandsinformationen zu erhalten, und Senden dieser Messungen zum Netzwerkknoten (1a-c); wobei der Schritt zum Empfangen ein Identifizieren einer Kanalzustandsinformationen-Referenzsignal-, CSI-RS, Ressource umfasst;
   Erhalten (22) mindestens einer ersten Messung von Kanalzustandsinformationen und einer zweiten Messung von Kanalzustandsinformationen als Reaktion auf den mindestens einen Befehl, wobei die zweite Messung von Kanalzustandsinformationen eine Messung an der CSI-RS Ressource ist;
   Bestimmen (24), ob eine Interferenz entsprechend der zweiten Messung von Kanalzustandsinformationen während einer Datenempfangsphase (16) auftritt, durch einen Vergleich von zwei Hypothesen, bei welchen eine Interferenz von einem benachbarten Netzwerkknoten vorhanden beziehungsweise nicht vorhanden ist; und
   Decodieren (26) empfangener Signale, wenn eine Interferenz, die der zweiten Messung von Kanalzustandsinformationen entspricht, auftritt, basierend auf der zweiten Messung von Kanalzustandsinformationen.

4. Verfahren nach Anspruch 3, wobei der Schritt zum Decodieren (26) empfangener Signale eine Verwendung der zweiten Messung von Kanalzustandsinformationen für einen ersten Ressourcenblock, wo eine Interferenz entsprechend der zweiten Messung von Kanalzustandsinformationen auftritt, und keine Verwendung der zweiten Messung von Kanalzustandsinformationen für einen zweiten Ressourcenblock, wo eine Interferenz entsprechend der zweiten Messung von Kanalzustandsinformationen nicht vorhanden ist, umfasst.

5. Verfahren nach Anspruch 3, ferner umfassend den Schritt zum Decodieren (29) ohne Verwendung der zweiten Messung von Kanalzustandsinformationen, wenn eine Interferenz entsprechend der zweiten Messung von Kanalzustandsinformationen nicht auftritt.

6. Verfahren nach Ansprüchen 3 bis 5, wobei der Schritt zum Decodieren (26) den Schritt umfasst:

   Berechnen (27), wenn eine Interferenz entsprechend der zweiten Messung von Kanalzustandsinformationen auftritt, einer Interferenzschätzung unter Verwendung der zweiten Messung von Kanalzustandsinformationen.

7. Verfahren nach Anspruch 6, wobei der Schritt zum Berechnen (27) eine Verwendung eines geschätzten effektiven Kanals für einen Netzwerkknoten entsprechend der zweiten Messung von Kanalzustandsinformationen, abgeleitet von der zweiten Messung von Kanalzustandsinformationen, umfasst.

8. Verfahren nach einem Anspruch 3 bis 7, wobei der Schritt zum Bestimmen (24), ob die Interferenz entsprechend der zweiten Messung von Kanalzustandsinformationen auftritt, ein Detektieren einer Funksignalkomponente umfasst, die für einen Netzwerkknoten charakteristisch ist, entsprechend der zweiten Messung von Kanalzustandsinformationen, wobei die Funksignalkomponente mindestens eine Funksignalkomponente umfasst, die ausgewählt ist aus einer Gruppe bestehend aus Quadraturamplitudenmodulation, räumlicher Funkeigenschaft, Leistungspegel und räumlichem Interferenz-Fußabdruck.

9. Verfahren nach einem Anspruch 3 bis 8, wobei die Schritte zum Bestimmen (24), ob eine Interferenz entsprechend der zweiten Messung von Kanalzustandsinformationen auftritt, und Decodieren (26) empfangener Signale für die Dauer eines Funkträgers, der mit den empfangenen Signalen verknüpft ist, wiederholt ausgeführt werden.

10. Verfahren nach einem Anspruch 3 bis 8, wobei der Schritt zum Bestimmen (24), ob eine Interferenz entsprechend der zweiten Messung von Kanalzustandsinformationen auftritt, nur einmal für die Dauer eines Funkträgers, der mit den empfangenen Signalen verknüpft ist, ausgeführt wird.

11. Verfahren nach einem Anspruch 3 bis 8, wobei das Verfahren jedes Mal wiederholt wird, wenn ein Befehl von einem Netzwerkknoten (1a-c) empfangen wird, um mindestens eine erste und eine zweite Messung von Kanalzustandsinformationen zu erhalten.

12. Verfahren nach Anspruch 11, wobei die CSI-RS Ressource ein Element in einem Coordinated Multipoint Transmission, CoMP, Messungssatz oder einem CoMP Ressourcenmanagementsatz ist, wobei der CoMP Messungssatz mehrere CSI RS Ressourcen mit Nicht-Nullleistung umfasst, für welche das UE konfiguriert ist, Kanalmessungen für eine CSI Meldung zu erhalten, und der CoMP Ressourcenmanagementsatz Nicht-Nullleistung-CSI RS Ressourcen zum Messen und Melden der empfangenen Referenzsignalleistung entspricht.

13. Verfahren nach einem Anspruch 3 bis 10, wobei der mindestens eine Befehl ein Identifizieren einer Interferenzmessungsressource umfasst und wobei die sekundäre Messung von Kanalzustandsinformationen eine Messung einer Interferenz an der Interferenzmessungsressource ist.

14. Verfahren nach einem Anspruch 3 bis 13, wobei der Schritt zum Erhalten (22) ein Erhalten einer dritten Messung von Kanalzustandsinformationen umfasst; der Schritt zum Bestimmen (24) ein Bestimmen, ob eine Interferenz entsprechend der dritten Messung von Kanalzustandsinformationen während der Datenempfangsphase (16) auftritt, umfasst; und der Schritt zum Decodieren (26) ein Decodieren empfangener Signale, wenn eine Interferenz entsprechend der dritten Messung von Kanalzustandsinformationen auftritt, basierend auf der dritten Messung von Kanalzustandsinformationen umfasst.

15. Verfahren nach einem der Ansprüche 3 bis 14, ferner umfassend den Schritt: Senden der mindestens ersten Messung von Kanalzustandsinformationen und der zweiten Messung von Kanalzustandsinformationen zum Netzwerkknoten (1a-c).

**Revendications**

1. Equipement utilisateur (2) comprenant :

un processeur (50) ; et
une mémoire d'instructions (54) stockant des instructions qui, lorsqu'elles sont exécutées, amènent l'équipement utilisateur (2) à :

recevoir au moins une commande d'un noeud de réseau (1a-c) pour obtenir au moins une première et une deuxième mesure d'informations d'état de canal et envoyer ces mesures au noeud de réseau (1a-c) ; dans lequel les instructions pour recevoir au moins une commande comprennent des instructions pour identifier une ressource de signal de référence d'informations d'état de canal CSI-RS ;
obtenir au moins une première mesure d'informations d'état de canal et une deuxième mesure d'informations d'état de canal en réponse à la au moins une commande et dans lequel la mesure secondaire d'informations d'état de canal est une mesure sur la ressource CSI-RS ;

déterminer si une interférence correspondant à la deuxième mesure d'informations d'état de canal se produit au cours d'une phase de réception de données (16) en comparant deux hypothèses où l'interférence d'un noeud de réseau voisin est présente ou absente, respectivement ; et

décoder des signaux reçus lorsqu'une interférence correspondant à la deuxième mesure d'informations d'état de canal se produit sur la base de la deuxième mesure d'informations d'état de canal.

**2.** Equipement utilisateur (2) selon la revendication 1, dans lequel les instructions pour décoder des signaux reçus comprennent des instructions pour utiliser la deuxième mesure d'informations d'état de canal pour un premier bloc de ressource où l'interférence correspondant à la deuxième mesure d'informations d'état de canal se produit et sans l'utilisation de la deuxième mesure d'informations d'état de canal pour un second bloc de ressource où l'interférence correspondant à la deuxième mesure des informations d'état de canal est absente.

**3.** Procédé exécuté dans un équipement utilisateur (2) d'un système de communication mobile (5), le procédé comprenant les étapes consistant à :

recevoir (20) au moins une commande d'un noeud de réseau (1a-c) pour obtenir au moins une première et une deuxième mesure d'informations d'état de canal et envoyer ces mesures au noeud de réseau (1a-c) ; dans lequel l'étape de réception comprend l'identification d'une ressource de signal de référence d'informations d'état de canal CSI-RS ;

obtenir (22) au moins une première mesure d'informations d'état de canal et une deuxième mesure d'informations d'état de canal en réponse à la au moins une commande, dans lequel la deuxième mesure d'informations d'état de canal est une mesure sur la ressource CSI-RS ;

déterminer (24) si une interférence correspondant à la deuxième mesure d'informations d'état de canal se produit au cours d'une phase de réception de données (16) en comparant deux hypothèses où l'interférence d'un noeud de réseau voisin est présente ou absente, respectivement ; et

décoder (26) des signaux reçus lorsqu'une interférence correspondant à la deuxième mesure d'informations d'état de canal se produit sur la base de la deuxième mesure d'informations d'état de canal.

**4.** Procédé selon la revendication 3, dans lequel l'étape de décodage (26) de signaux reçus comprend l'utilisation de la deuxième mesure d'informations d'état de canaux pour un premier bloc de ressource où l'interférence correspondant à la deuxième mesure d'informations d'état de canal se produit et sans l'utilisation de la deuxième mesure d'informations d'état de canal pour un second bloc de ressource où l'interférence correspondant à la deuxième mesure des informations d'état de canal est absente.

**5.** Procédé selon la revendication 3, comprenant en outre l'étape de décodage (29) sans l'utilisation de la deuxième mesure d'informations d'état de canal lorsqu'une interférence correspondant à la deuxième mesure d'informations d'état de canal ne se produit pas.

**6.** Procédé selon les revendications 3 à 5, dans lequel l'étape de décodage (26) comprend l'étape consistant à :

calculer (27), lorsqu'une interférence correspondant à la deuxième mesure d'informations d'état de canal se produit, une estimation d'interférence en utilisant la deuxième mesure d'informations d'état de canal.

**7.** Procédé selon la revendication 6, dans lequel l'étape de calcul (27) comprend l'utilisation d'un canal efficace estimé pour un noeud de réseau correspondant à la deuxième mesure d'informations d'état de canal dérivé de la deuxième mesure d'informations d'état de canal.

**8.** Procédé selon l'une quelconque des revendications 3 à 7, dans lequel l'étape de détermination (24) du fait que l'interférence correspondant à la deuxième mesure d'informations d'état de canal se produise ou non comprend la détection d'une composante de signal radio caractéristique d'un noeud de réseau correspondant à la deuxième mesure d'informations d'état de canal, la composante de signal radio comprenant au moins une composante de signal radio choisie dans un groupe constitué d'une modulation d'amplitude en quadrature, d'une caractéristique de radio spatiale, d'un niveau de puissance et d'une empreinte d'interférence spatiale.

**9.** Procédé selon l'une quelconque des revendications 3 à 8, dans lequel les étapes de détermination (24) du fait qu'une interférence correspondant à la deuxième mesure d'informations d'état de canal se produise ou non et de décodage (26) de signaux reçus sont effectuées de manière répétée pendant la durée d'une porteuse radio associée aux signaux reçus.

10. Procédé selon l'une quelconque des revendications 3 à 8, dans lequel l'étape de détermination (24) du fait qu'une interférence correspondant à la deuxième mesure d'informations d'état de canal se produise ou non est effectuée seulement une fois pendant la durée d'une porteuse radio associée aux signaux reçus.

11. Procédé selon l'une quelconque des revendications 3 à 8, dans lequel le procédé est répété chaque fois qu'une commande est reçue d'un noeud de réseau (1a-c) pour obtenir au moins une première mesure d'informations d'état de canal et une deuxième mesure d'informations d'état de canal.

12. Procédé selon la revendication 11, dans lequel la ressource CSI-RS est un élément d'un ensemble de mesure de transmission multipoint coordonnée CoMP ou d'un ensemble de gestion de ressources CoMP, l'ensemble de mesure CoMP comprenant une pluralité de ressources CSI-RS de puissance non nulle, pour lesquelles le UE est configuré pour obtenir des mesures de canal pour faire rapport de CSI et l'ensemble de gestion de ressources CoMP correspondant à des ressources CSI-RS de puissance non nulle pour mesurer et rapporter la puissance reçue de signaux de référence.

13. Procédé selon l'une quelconque des revendications 3 à 10, dans lequel la au moins une commande comprend l'identification d'une ressource de mesure d'interférence et dans lequel la mesure secondaire d'informations d'état de canal est une mesure d'interférence sur la ressource de mesure d'interférence.

14. Procédé selon l'une quelconque des revendications 3 à 13, dans lequel l'étape d'obtention (22) comprend l'obtention d'une troisième mesure d'informations d'état de canal ; l'étape de détermination (24) comprend la détermination du fait qu'une interférence correspondant à la troisième mesure d'informations d'état de canal se produise ou non au cours de la phase de réception de données (16) ; et l'étape de décodage (26) comprend le décodage de signaux reçus lorsqu'une interférence correspondant à la troisième mesure d'informations d'état de canal se produit sur la base de la troisième mesure d'informations d'état de canal.

15. Procédé selon l'une quelconque des revendications 3 à 14, comprenant en outre l'étape d'envoi de la au moins une première mesure d'informations d'état de canal et de la deuxième mesure d'informations d'état de canal au noeud de réseau (1a-c).

Fig. 1

Fig. 2

Fig. 3

Fig. 4

Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2010106828 A1

### Non-patent literature cited in the description

- **INTERDIGITAL COMMUNICATIONS et al.** CQI definition for CoMP. *R1-121310,* 20 March 2012
- Performance of Advanced Receiver Employing Interference Rejection Combining to Suppress Inter-Cell Interference in L TE-Advanced Downlink. **YUSUKE OHWATARI et al.** VEHICULAR TECHNOLOGY CONFERENCE (VTC FALL). IEEE, 05 September 2011, 1-7
- System-Level Modeling and Evaluation of Interference Suppression Receivers in LTE System. **MARKO LAMPINEN et al.** VEHICULAR TECHNOLOGY CONFERENCE (VTC SPRING). IEEE, 06 May 2012, 1-5